# EUROPEAN PATENT SPECIFICATION

(11) **EP 2 283 078 B1**
(45) Date of publication and mention of the grant of the patent: **04.09.2013**
(21) Application number: 08874296.0
(22) Date of filing: 31.12.2008
(51) Int. Cl.: C08L 69/00

(54) **POLYCARBONATE RESIN COMPOSITION WITH GOOD LIGHT STABILITY AND DIMENSIONAL STABILITY**
POLYCARBONATHARZZUSAMMENSETZUNG MIT GUTER LICHTSTABILITÄT UND MASSHALTIGKEIT
COMPOSITION DE RÉSINE DE POLYCARBONATE POSSÉDANT DES CARACTÉRISTIQUES DE STABILITÉ À LA LUMIÈRE ET DE STABILITÉ DIMENSIONNELLE

(30) Priority: 15.05.2008 KR 20080045090
(43) Date of publication of application: 16.02.2011
(73) Proprietor: CHEIL INDUSTRIES INC., Kumi-city Kyungsangbuk-do 730-030 (KR)
(72) Inventor: JUNG, Hyuk-Jin, Uiwang-si, Gyeonggi-do (KR); LIM, Jong-Cheol, Uiwang-si, Gyeonggi-do (KR)
(74) Representative: Michalski Hüttermann & Partner Patentanwälte
(86) International application number: PCT/KR2008/007905
(87) International publication number: WO 2009/139535

(56) References cited:
- WO-A1-2007/078035
- WO-A1-2008/082202
- JP-A- 2003 213 114
- KR-B1- 100 575 258
- KR-B1- 100 782 265
- US-A1- 2005 143 532
- US-A1- 2007 072 960

## Description

### [Technical Field]

The present invention relates to a polycarbonate resin composition having light stability and excellent dimensional stability. More particularly, the present invention relates to a polycarbonate resin composition having high light stability and excellent dimensional stability without reduction of impact strength and flame retardancy.

### [Background Art]

Polycarbonate resin is an engineering plastic having excellent mechanical strength, high heat resistance, transparency, and the like, so it is applicable to the various fields such as office automation devices, electric/electronic parts, construction materials, and the like. The resin used in LCD (liquid crystal display) back-light parts requires high reflectivity, light stability, color fixation, and the like, and further requires high fluidity as devices such as televisions, monitors, laptops, and the like are becoming slimmer and thinner.

When a polycarbonate resin is used in the LCD back-light parts, the resin is generally colored with high whiteness and applied to a back-light frame in order to minimize backlight loss. The white pigment for coloring the resin with high whiteness usually include titanium dioxide TiO₂ having the highest reflectivity in air.

In order to produce flame retardancy in a resin composition, it conventionally includes a halogen-based flame retardant and an antimony compound or phosphorus compound. However, when the halogen-based flame retardant is used, it highly requires a resin including no halogen-based flame retardant because it generates a harmful gas during combustion. The representative flame retardant including a phosphorus compound includes a phosphate ester-based flame retardant, but the resin composition including the same causes problems in that the flame retardant causes a "juicing" phenomenon in which the flame retardant migrates to the surface of the molded product and is deposited there during the forming process, and the heat resistance of the resin composition is remarkably decreased.

In order to provide high heat resistance and flame retardancy without using a halogen-based flame retardant, the most common technique uses a sulfonic acid metal salt, but the flame retardancy is deteriorated and the resin is decomposed at a high temperature when a large amount of titanium dioxide is used for coloring with the high whiteness, so that the mechanical properties of the resin composition are deteriorated.

Japanese Patent Publication No. 1997-012853 discloses a flame retardant resin composition composed of a polycarbonate, titanium dioxide, a polyorganosiloxane-polyalkyl acrylate combined rubber, a halogen-based and phosphate ester-based flame retardant, and a fluorinated polyolefin-based resin, and U.S. Patent No. 5,837,757 discloses a flame retardant resin composition composed of a polycarbonate, titanium dioxide, a stilbene-bisbenzoxazole derivative, a phosphate ester-based flame retardant, polyorganosiloxane, and a fluorinated polyolefin-based resin, but when these compositions are exposed to a light source for the long time, the halogen-based and phosphate ester-based flame retardant accelerates the decomposition of the resin composition to significantly generate yellowing, so that it causes the drawback of deteriorating reflectivity.

As a patent in which the problem is solved, U.S. Patent No. 6,664,313 discloses a flame retardant resin composition composed of a polycarbonate, titanium dioxide, silica, polyorganosiloxane, and a fluorinated polyolefin-based resin. However, in this reference, since silica is used as a flame retardant, the impact strength of the composition is deteriorated, and the appearance of injection molding product is deteriorated.

### [DETAILED DESCRIPTION]

### [Technical Problem]

One embodiment of the present invention provides a polycarbonate resin composition having high light stability and excellent dimensional stability without reduction of impact strength and flame retardancy.

Another embodiment of the present invention provides a thermoplastic resin composition having excellent impact resistance, heat resistance, flame retardancy, workability, appearance, and the like, resulting in improvement of property balance.

A further embodiment of the present invention provides a molded product made using the polycarbonate resin composition.

The embodiments of the present invention are not limited to the above technical purposes, and a person of ordinary skill in the art can understand other technical purposes.

### [Technical Solution]

According to one embodiment of the present invention, a composition having light stability and dimensional stability is provided that includes (A) 70 to 95 parts by weight of a thermoplastic polycarbonate resin; (B) 5 to 40 parts by weight of a thermoplastic non-crystalline polyester copolymer; (C) 5 to 50 parts by weight of titanium dioxide; (D) 0.1 to 10 parts by weight of an organic siloxane copolymer; and (E) 0.05 to 5 parts by weight of a fluorinated polyolefin-based resin.

When titanium dioxide, an organic siloxane copolymer, and a fluorinated polyolefin-based resin are added to the polycarbonate resin and non-crystalline polyester copolymer, it is possible to obtain a composition having excellent light stability and dimensional stability without reduction of impact resistance, flame retardancy, and the like of the resin.

According to another embodiment of the present invention, a molded product made using the polycarbonate resin composition is provided.

Hereinafter, further embodiments of the present invention will be described in detail.

### [Advantageous Effects]

The polycarbonate resin composition having excellent light stability and dimensional stability shows excellent mechanical strength without reduction of impact strength and workability, so it is applicable to molded products such as LCD back-light parts requiring fine dimensional stability or other parts requiring light stability.

### [Brief Description of the Drawing]

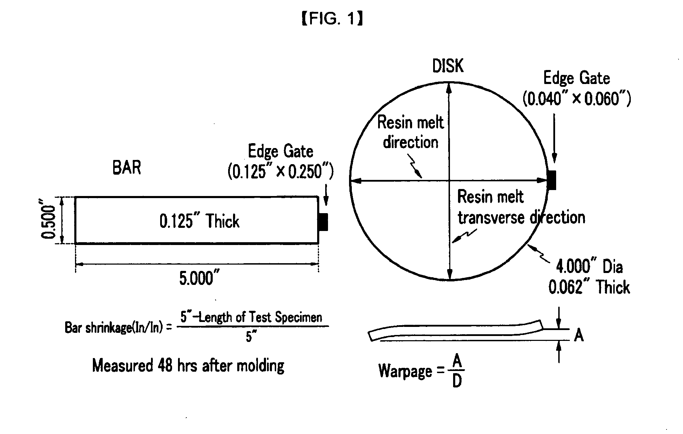

FIG. 1 shows a method of measuring dimensional stability.

### [Best Mode]

Exemplary embodiments of the present invention will hereinafter be described in detail. However, these embodiments are only exemplary, and the present invention is not limited thereto.

As used herein, the terms "substituted alkyl", "substituted alkylene", "substituted alkylidene", "substituted cycloalkylene", "substituted cycloalkylidene", "substituted aryl", and "substituted arylene" independently refer to an alkyl, an alkylene, an alkylidene, a cycloalkylene, a cycloalkylidene, an aryl, and an arylene substituted with a halogen, a C1 to C30 alkyl, a C6 to C30 aryl, a C2 to C30 heteroaryl, or a C1 to C20 alkoxy.

As used herein, when specific definition is not provided, the term "an alkyl" refers to a C1 to C20 alkyl, the term "an alkylene" refers to a C1 to C20 alkylene, the term "an aryl" refers to a C6 to C30 aryl, the term "an alkoxy" refers to a C1 to C20 alkoxy, the term "an alkenyl" refers to a C1 to C20 alkenyl, and the term "a cycloalkane" refers to a C3 to C20 cycloalkane.

The polycarbonate resin composition having excellent light stability and dimensional stability according to one embodiment of the present invention includes (A) 70 to 95 parts by weight of a thermoplastic polycarbonate resin; (B) 5 to 40 parts by weight of a thermoplastic non-crystalline polyester copolymer;

(C) 5 to 50 parts by weight of titanium dioxide; (D) 0.1 to 10 parts by weight of an organic siloxane copolymer; and (E) 0.05 to 5 parts by weight of a fluorinated polyolefin-based resin.

Each component included in the polycarbonate resin composition having excellent light stability and dimensional stability according to embodiments of the present invention will hereinafter be described in detail.

### (A) Polycarbonate resin

The polycarbonate resin used in the resin composition is an aromatic polycarbonate resin that is prepared by reacting diphenols of the following Chemical Formula 1 with a compound of phosgene, halogen formate, or carbonate. 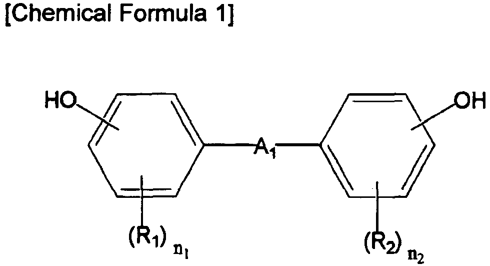 In the above Chemical Formula 1, A₁ is a single bond, a substituted or unsubstituted C1 to C5 alkylene, a substituted or unsubstituted C1 to C5 alkylidene, a substituted or unsubstituted C3 to C6 cycloalkylene, a substituted or unsubstituted C5 to C6 cycloalkylidene, CO, S, or SO₂,

R₁ and R₂ are each independently a substituted or unsubstituted C1 to C30 alkyl, or a substituted or unsubstituted C6 to C30 aryl, and
n₁ and n₂ are each independently integers ranging from 0 to 4.

As used herein, the term "substituted" refers to one substituted with at least a substituent selected from the group consisting of a halogen, a C1 to C30 alkyl, a C1 to C30 haloalkyl, a C6 to C30 aryl, a C2 to C30 heteroaryl, a C1 to C20 alkoxy, and combinations thereof.

The diphenols represented by the above Chemical Formula 1 may be used in combinations to constitute repeating units of the polycarbonate resin. Specific examples of the diphenols include hydroquinone, resorcinol, 4,4'-dihydroxydiphenyl, 2,2-bis(4-hydroxyphenyl)-propane, 2,4-bis(4-hydroxyphenyl)-2-methylbutane, 1,1-bis(4-hydroxyphenyl)-cyclohexane, 2,2-bis(3-chloro-4-hydroxyphenyl)-propane, 2,2-bis(3,5-dichloro-4-hydroxyphenyl)-propane, and the like. Of the diphenols, 2,2-bis(4-hydroxyphenyl)-propane, 2,2-bis(3,5-dichloro-4-hydroxyphenyl)-propane, or 1,1-bis(4-hydroxyphenyl)-cyclohexane may be preferable. Further, 2,2-bis(4-hydroxyphenyl)-propane (referred to as "bisphenol-A") may be more preferable.

The polycarbonate resin has an average molecular weight ranging from 10,000 to 200,000, and in another embodiment, it has an average molecular weight ranging from 15,000 to 80,000, but is not limited thereto.

The polycarbonate resin may be a mixture of copolymers prepared from two or more different diphenols. The polycarbonate resin may be a linear polycarbonate resin, a branched polycarbonate resin, a polyestercarbonate copolymer, and the like.

The linear polycarbonate resin may include a bisphenol-A-based polycarbonate resin. The branched polycarbonate resin may include one produced by reacting a multi-functional aromatic compound such as trimellitic anhydride, trimellitic acid, and so on with diphenols and a carbonate. The multi-functional aromatic compound may be included in an amount of 0.05 to 2mol% based on the total weight of the branched polycarbonate resin. The polyester carbonate copolymer resin may be prepared by reacting a difunctional carboxylic acid with diphenols and a carbonate. The carbonate may include a diaryl carbonate such as diphenyl carbonate, and ethylene carbonate.

The polycarbonate resin may be included in an amount of 70 to 95 parts by weight. When the polycarbonate is included within the above range, the resin can have an excellent property balance of impact resistance, heat resistance, flame retardancy, workability, appearance, and the like.

### (B) Thermoplastic non-crystalline polyester copolymer

The thermoplastic non-crystalline (amorphous) polyester copolymer that is the component (B) of the resin composition according to present invention is a non-crystalline polyalkylene terephthalate copolymer that is prepared using a cycloalkane dialcohol represented by the following Chemical Formula 2 as a copolymerization component. The polyester copolymer is prepared by partially substituting an alkylene glycol constituting a polyalkylene terephthalate resin with a cycloalkane dialcohol represented by the following Chemical Formula 2. For example, the polyester copolymer may include a copolymer of which ethylene glycol constituting polyethylene terephthalate resin is partially substituted with 1,4-cyclohexane dimethanol (CHDM) represented by the following Chemical Formula 3.

### [Chemical Formula 2]

HO-(R₃)n₃-A₂-(R₄)n₄-OH

In the above Chemical Formula 2, A₂ is a cycloalkylene, R₃ and R₄ are independently a substituted or unsubstituted alkylene, and n₃ and n₄ are independently integers ranging from 1 to 4.

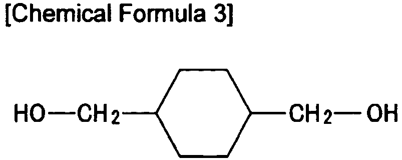

The thermoplastic non-crystalline polyester copolymer may include a polyester copolymer resin of which 3 to 48 mol% of alkylene glycol constituting polyethylene terephthalate resin is substituted with a cycloalkane dialcohol, and in another embodiment, 5 to 20 mol% is substituted. When the cycloalkane dialcohol is substituted at less than 3 mol%, it does not significantly improve the dimensional stability of the thermoplastic resin composition; on the other hand, when it is more than 48 mol%, it deteriorates the heat resistance of the thermoplastic resin composition.

According to one embodiment, the non-crystalline polyester copolymer (B) is used in a range from 5 to 40 parts by weight, and in another embodiment, it ranges from 10 to 30 parts by weight. When it is used at less than 5 parts by weight, the light stability is deteriorated; on the other hand, when it is more than 40 parts by weight, the impact resistance and flame retardancy are deteriorated.

### (C) Titanium dioxide

Titanium dioxide according to the present invention may include general titanium dioxide, and the manufacturing method and the particle diameter thereof are not limited. The titanium dioxide is preferably surface-treated with an inorganic surface treatment agent or an organic surface treatment agent.

The inorganic surface treatment agent includes aluminum oxide (alumina, Al₂O₃), silicon dioxide (silica, SiO₂), zirconia (zirconium dioxide, ZrO₂), sodium silicate, sodium aluminate, sodium aluminum silicate, zinc oxide, mica, and the like.

The organic surface treatment agent includes polydimethyl siloxane, trimethyl propane (TMP), pentaerythritol, and the like.

The inorganic or organic surface treatment agent is surface-treated at about 0.3 or less parts by weight based on 100 parts by weight of titanium dioxide. According to one embodiment, it is surface-treated at 0.001 to 0.3 parts by weight.

In one embodiment, it includes the titanium dioxide of which an inorganic surface treatment agent of alumina (Al₂O₃) is coated at 2 parts by weight or less based on 100 parts by weight of the titanium dioxide.

Furthermore, the titanium dioxide that is surface-treated with alumina may further be modified with an inorganic surface treatment agent such as silicon dioxide, zirconium dioxide, sodium silicate, sodium aluminate, sodium aluminum silicate, mica, and the like; or an organic surface treatment agent such as polydimethyl siloxane, trimethyl propane (TMP), and pentaerythritol.

According to one embodiment, the titanium dioxide(C) is used in a range of 5 to 50 parts by weight, and in another embodiment, it ranges from 10 to 30 parts by weight. When it is used at less than 5 parts by weight, the light stability is deteriorated; on the other hand, when it is used at more than 50 parts by weight, the impact resistance is deteriorated.

### (D) Organic siloxane copolymer

The component (D) constituting the resin composition of the present invention is an organic siloxane copolymer represented by the following Chemical Formula 4.

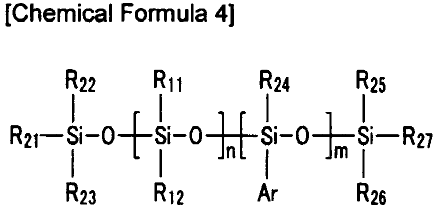

In the above Chemical Formula 4, R₁₁ and R₁₂ are independently an alkyl or an aryl, R₂₁ to R₂₇ are independently selected from the group consisting of an alkyl, an aryl, a hydroxy, an alkoxy, an aryloxy, and alkenyl, Ar is an aryl, and n and m are integers representing a repeating unit. The organic siloxane copolymer is prepared by mixing copolymers having different n and m values to get an average n:m ratio of between 9:1 and 3:7 and an n+m range of 1 to 500.

The representative example of the organic siloxane copolymer includes a phenyl-substituted siloxane copolymer represented by the following Chemical Formula 5.

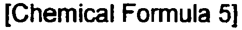

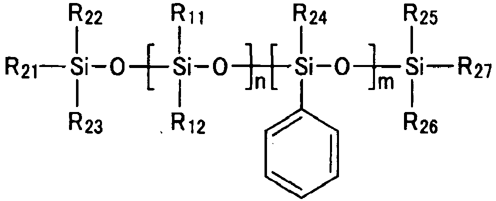

In the above Chemical Formula 5, R₁₁ and R₁₂ are methyl or phenyl, R₂₁ to R₂₇ are selected from the group consisting of methyl, phenyl, hydroxy, methoxy, ethoxy, phenoxy, and vinyl, and n and m are the same as in the above Formula 4.

When the phenyl-substituted siloxane copolymer is used as an organic siloxane copolymer, it is more superior in the views of light stability and color fixation. Examples of the phenyl substituted siloxane copolymer include poly(methylphenyl)siloxane, poly(diphenyl)siloxane, a dimethylsiloxane-diphenylsiloxane copolymer, a dimethylsiloxane-methylphenylsiloxane copolymer, or mixtures thereof.

If the organic siloxane copolymer has a dynamic viscosity ranging from 1 to 1000 mm²/S at 25°C, it is advantageous in the views of light stability and impact strength, and in another embodiment, the dynamic viscosity ranges from 4 to 500 mm²/S.

In one embodiment, the organic siloxane copolymer is used in an amount of 0.1 to 10 parts by weight. When the organic siloxane copolymer is used at less than 0.1 parts by weight, the flame retardancy is deteriorated; on the other hand, when it is more than 10 parts by weight, the coloring property of the resin is deteriorated.

### (E) Fluorinated polyolefin-based resin

The fluorinated polyolefin-based resin (E) used in the flame retardant thermoplastic resin composition of the present invention includes polytetrafluoroethylene, polyvinylidenefluoride, a tetrafluoroethylene/vinylidenefluoride copolymer, a tetrafluoroethylene/hexafluoropropylene copolymer, an ethylene/tetrafluoroethylene copolymer, and the like. They may independently be used, or two or more thereof can be used together.

When the fluorinated polyolefin-based resin is mixed with the other constituting components according to the present invention and extruded, it forms a fibrillar network in the resin, so the fusion viscosity of the resin is decreased during combustion and the shrinkage is increased to prevent the resin from exhibiting the dripping phenomenon.

The fluorinated resin of the resin composition according to the present invention can be prepared by a known polymerization method. For example, it may be prepared in an aqueous media for forming a free radical such as sodium, potassium, or ammonium peroxydisulfate and the like under the conditions of a pressure of 7 to 71 kg/cm² and a temperature of 0 to 200°C, and preferably 20 to 100°C. The fluorinated polyolefin-based resin may be used in an emulsion state or a powder state. When the emulsion fluorinated polyolefin-based resin is used, the dispersion is improved in the entire resin composition, but the manufacturing process is complicated. Accordingly, even when it is used in a powder state, it is suitable if it is appropriately dispersed in the entire resin composition to form the fiber web.

According to one embodiment, the fluorinated polyolefin-based resin that is used for preparing the resin composition has a particle size of 0.05 to 1000µm and a specific gravity of 1.2 to 2.3 g/cm³.

According to one embodiment, the fluorinated polyolefin-based resin is added at 0.05 to 5 parts by weight. When the fluorinated polyolefin-based resin is added within the range, the balance of flame retardancy and mechanical properties is improved.

### (F) Other additive

The polycarbonate resin composition having excellent light stability and dimensional stability includes an additive including an ultraviolet (UV) stabilizer, a fluorescent whitening agent, a lubricant, a release agent, a nuclear agent, an antistatic agent, a stabilizer, a reinforcing material, an inorganic material additive, a pigment, or a dye along with the above (A) to (D) components, as needed.

The ultraviolet (UV) stabilizer plays a role of inhibiting the color change of the resin composition and reflectivity deterioration by the UV irradiation, and it may include a benzotriazole-based, benzophenone-based, or triazine-based compound, and the like.

The fluorescent whitening agent plays a role of improving the reflectivity of the polycarbonate resin composition, and it may include a tilbene-bisbenzo oxazole derivative such as 4-(benzoxazol-2-yl)-4'-(5-methylbenzoxazol-2-yl)stilbene or 4,4'-bis(benzoxazol-2-yl)stilbene and the like.

The release agent may include a fluorine-included polymer, silicone oil, a metal salt of stearic acid, a metal salt of montanic acid, a montanate ester wax, or a polyethylene wax, and the nuclear agent may include talc or clay.

The inorganic additive may include glass fiber, silica, clay, calcium carbonate, calcium sulfate, or glass beads.

The additive may be used at 60 parts by weight based on 100 parts by weight of the thermoplastic polycarbonate resin (A). According to one embodiment, it is used at 1 to 40 parts by weight. When it is added within the range, it is possible to provide a suitable physical property balance.

The resin composition may be prepared in accordance with any conventional method known for manufacturing a resin composition. For example, after simultaneously mixing the constituting components of the present invention and the other additives, it is fusion-extruded in an extruder to provide a pellet.

The polycarbonate resin composition is applicable to various molded products, particularly to various electric-electronic devices such as back-light parts for a liquid crystal display device, a television, a monitor, a laptop, and the like.

### [Examples]

Hereinafter, the present invention is illustrated in more detail with reference to examples. However, the embodiments of the present invention are exemplary, and the present invention is not limited thereto.

### (A) Thermoplastic polycarbonate resin

The polycarbonate resin of the examples and comparative examples was bisphenol-A polycarbonate having a weight average molecular weight of 25,000 g/mol, which is PANLITE L-1250WP manufactured by Japan Teijin.

### (B) Polyester resin

### (B-1) Thermoplastic non-crystalline polyester copolymer

The non-crystalline polyester copolymer used in the examples and comparative examples was a non-crystalline polyethylene terephthalate copolymer having a copolymer component of 1,4-cyclohexane dimethanol, which is SKY PET BR8040 manufactured by Korea SK Chemicals. The 1,4-cyclohexane dimethanol was added at 3 to 48 mol%, and the intrinsic viscosity [η] was 0.8 dl/g at 25°C in an o-chloro phenol solvent.

### (B-2) Polyethylene terephthalate homopolymer

A polyethylene terephthalate homopolymer used in the comparative examples had an intrinsic viscosity [η] of 1.6dl/g, which was ANYPET 1100 manufactured by Korea Anychem.

### (C) Titanium dioxide

Titanium dioxide used in the examples of the present invention and the comparative examples was TIPURE PCX-02, manufactured by US Dupont.

### (D) Flame retardant

(D-1) An organic siloxane polymer (D-1) used in the examples of the present invention and the comparative examples was TSF-433 polymethyl phenylsiloxane, manufactured by GE-Toshiba Silicon.

(D-2) A bisphenol-A derived oligomer phosphate ester-based flame retardant (D-2) used in the comparative examples was CR-741, manufactured by Japan Daihachi.

(D-3) A resorcinol derived oligomer phosphate ester-based flame retardant (D-3) used in the comparative examples was PX-200, manufactured by Japan Daihachi.

(D-4) A metal salt sulfonate-based flame retardant (D-4) used in the comparative examples was FR-2025, manufactured by US 3M.

### (E) Fluorinated polyolefin-based resin

TEFLON (tetrafluoroethylene) (trade name) 850-A manufactured by US 3M was used as a fluorinated polyolefin-based resin.

### Examples 1 and 2 and Comparative Examples 1 to 6

The above-mentioned components were mixed in a general mixer in accordance with the composition ratios shown in the following Table 1 and extruded by a twin screw extruder of UD=35, Φ=45mm, to provide a pellet extruded product.

The specimen was prepared from the obtained pellets by a 10 oz extruder at an injection temperature of 280 to 300°C to determine physical properties and flame retardancy.

**(Table 1)**

| (unit: parts by weight) | | | | | | | | | |
|---|---|---|---|---|---|---|---|---|---|
| | | Examples | | Comparative Examples | | | | | |
| | | 1 | 2 | 1 | 2 | 3 | 4 | 5 | 6 |
| (A) polycarbonate resin | | 80 | 70 | 100 | 70 | 80 | 80 | 80 | 30 |
| (B) polyester resin | B-1 | 20 | 30 | - | - | 20 | 20 | 20 | 70 |
| | B-2 | - | - | - | 30 | - | - | - | - |
| (C) titanium dioxide | | 20 | 20 | 20 | 20 | - | - | - | 20 |
| (D) flame retardant | D-1 | 2 | 3 | 2 | 2 | - | - | - | 3 |
| | D-2 | - | - | - | - | 7 | - | - | - |
| | D-3 | - | - | - | - | - | 5 | - | - |
| | D-4 | - | - | - | - | - | - | 0.1 | - |
| (E) fluorinated polyolefin-based resin | | 0.5 | 0.5 | 0.5 | 0.5 | 0.5 | 0.5 | 0.5 | 0.5 |

The obtained specimen was allowed to stand at 23°C and relative humidity of 50% for 48 hours, and it was measured to determine physical properties in accordance with the following method. The results are shown in the following Table 2.
(1) Dimensional stability: determined by measuring resin melt direction (MD) shrinkage of ASTM D955 standard bar specimen, and resin melt direction warpage and resin melt transverse direction warpage of a disk specimen.
(2) Light stability: determined by measuring Yellow index with a Minolta 3600D CIE Lab. Colorimeter before and after ultraviolet irradiation with an ASTM G53 standard UV-Condensation machine.
(3) Flame retardancy: measured by using a 2.0mm thick specimen in accordance with the UL-94 standard.
(4) Notch Izod impact strength: measured for a 1/8" specimen in accordance with the ASTM D256 standard.
(5) Heat resistance: it was performed by measuring Vicat softening temperature in accordance with the ASTM D1525 standard.

**(Table 2)**

| | | Examples | | Comparative Examples | | | | | |
|---|---|---|---|---|---|---|---|---|---|
| | | 1 | 2 | 1 | 2 | 3 | 4 | 5 | 6 |
| dimensional stability | Bar MD Shrinkage | 0.54 | 0.55 | 0.53 | 0.87 | 0.49 | 0.52 | 0.53 | 0.72 |
| | Disk MD Warpage | 0.48 | 0.50 | 0.46 | 0.79 | 0.42 | 0.43 | 0.45 | 0.69 |
| | Disk TD Warpage | 0.52 | 0.53 | 0.51 | 0.85 | 0.47 | 0.50 | 0.51 | 0.65 |
| light stabitity (yellow index) | Before ultraviolet (UV) radiation | 2.4 | 2.1 | 3.6 | 2.8 | 2.6 | 2.5 | 2.5 | 0.9 |
| | After ultraviolet (UV) radiation for 72 hours | 22.1 | 19.6 | 27.0 | 23.5 | 31.1 | 30.4 | 27.9 | 16.2 |
| | Yellow index difference | 19.7 | 17.5 | 23.4 | 20.7 | 28.5 | 27.9 | 25.4 | 15.3 |
| UL94 flame retardancy | 2.0mm specimen | V-0 | V-0 | V-0 | V-2 | V-1 | V-1 | Fail | Fail |
| | Total combustion time (second) | 27 | 36 | 27 | 95 | 67 | 64 | - | - |
| 1/8" IZOD impact strength (kgf·cm/cm) | | 32 | 30 | 37 | 16 | 13 | 15 | 17 | 5 |
| Vicat softening temperature (°C) | | 135 | 132 | 141 | 127 | 108 | 110 | 135 | 115 |

As shown in Table 2, Comparative Example 1 did not include the constituting component (B), and it had excellent dimensional stability, flame retardancy, impact strength, and heat resistance, bu+t remarkably deteriorated light stability.

Comparative Example 2 had the same composition as in Example 2, except that component (B-2) was used instead of a non-crystalline polyester copolymer. It is confirmed that the light stability was good, but the dimensional stability, flame retardancy, and impact strength were remarkably deteriorated in Comparative Example 2.

Comparative Examples 3, 4, and 5 had the same composition as in Example 1, except that components (D-2), (D-3), and (D-4) were used instead of the flame retardant (D-1). From the results of Table 2, compared to those of Example 1, the dimensional stability was good, but the light stability, flame retardancy, impact strength, and heat resistance were remarkably deteriorated in Comparative Examples 3 and 4; on the other hand, the dimensional stability and heat resistance were good, but the flame retardancy and impact strength were remarkably deteriorated in Comparative Example 5.

In Comparative Example 6, the components (A) and (B) were arranged into an amount range other than the range of the present invention. From the results of Table 2, it is confirmed that Comparative Example 7 had remarkably deteriorated dimensional stability, flame retardancy, impact strength, and heat resistance.

As shown in Table 2, when a polycarbonate resin, a non-crystalline polyester copolymer, titanium dioxide, an organic siloxane copolymer, and a fluorinated polyolefin-based resin were appropriately added, the color change was less generated without deteriorating dimensional stability, flame retardancy, IZOD impact strength, and heat resistance after irradiating the ultraviolet rays than those using polyethylene terephthalate, other flame retardants, and the composition of the present invention having other composition ratio ranges.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims. Therefore, the aforementioned embodiments are exemplary in every way, and the present invention is not limited thereto.

## Claims

1. A polycarbonate resin composition comprising:
(A) 70 to 95 parts by weight of a thermoplastic polycarbonate resin;
(B) 5 to 40 parts by weight of a thermoplastic non-crystalline polyester copolymer;
(C) 5 to 50 parts by weight of titanium dioxide;
(D) 0.1 to 10 parts by weight of an organic siloxane polymer; and
(E) 0.05 to 5 parts by weight of a fluorinated polyolefin-based resin.

2. The polycarbonate resin composition of claim 1, wherein the polyester copolymer (B) is a polyester copolymer resin that is obtained by partially substituting alkylene glycol constituting a polyalkylene terephthalate resin with cycloalkane dialcohol.

3. The polycarbonate resin composition of claim 2, wherein the polyester copolymer (B) a polyester copolymer resin that is obtained by substituting 3 to 48 mol% of an alkylene glycol constituting a polyalkylene terephthalate resin with cycloalkane dialcohol represented by the following Chemical Formula 2:
[Chemical Formula 2]
HO-(R₃)n₃-A₂-(R₄)n₄-OH
wherein, in the above Chemical Formula 2, A₂ is cycloalkylene, R₃ and R₄ are independently a substituted or unsubstituted alkylene, and n₃ and n₄ are independently integers ranging from 1 to 4.

4. The polycarbonate resin composition of claim 1, wherein the titanium dioxide is surface-treated with a surface treatment agent selected from the group consisting of an inorganic surface treatment agent and an organic surface treatment agent.

5. The polycarbonate resin composition of claim 4, wherein the titanium dioxide is surface-treated with a surface treatment agent selected from the group consisting of an inorganic surface treatment agent selected from the group consisting of silicon dioxide, zirconium dioxide, sodium silicate, sodium aluminate, sodium aluminum silicate, mica, and combinations thereof; an organic surface treatment agent selected from the group consisting of polydimethylsiloxane, trimethylpropane (TMP), pentaerythritol, and combinations thereof; and combinations thereof, in an amount of 0.3 parts by weight or less based on 100 parts by weight of the titanium dioxide.

6. The polycarbonate resin composition of claim 1, wherein the organic siloxane polymer (D) is represented by the following Chemical Formula 4: 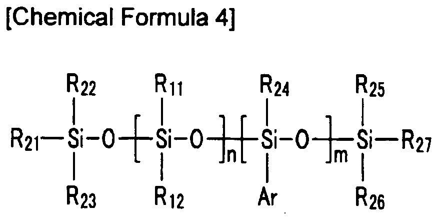 wherein, in the above Chemical Formula 4, R₁₁ and R₁₂ are independently an alkyl or an aryl, R₂₁ to R₂₇ are independently selected from the group consisting of an alkyl, an aryl, a hydroxy, an alkoxy, an aryloxy, and an alkenyl, Ar is an aryl, n and m are integers representing a repeating unit, and n+m ranges from 1 to 500.

7. The polycarbonate resin composition of claim 6, wherein the organic siloxane polymer is selected from the group consisting of poly(methylphenyl)siloxane, poly(diphenyl)siloxane, dimethylsiloxane-diphenylsiloxane, a dimethylsiloxane-methylphenylsiloxane copolymer, and combinations thereof.

8. The polycarbonate resin composition of claim 6, wherein the organic siloxane copolymer has a dynamic viscosity of 1 to 1000 mm²/S at 25°C.

9. The polycarbonate resin composition of claim 1, wherein the polycarbonate resin composition further comprises an additive selected from the group consisting of an ultraviolet (UV) stabilizer, a fluorescent whitening agent, a lubricant, a release agent, a nuclear agent, an antistatic agent, a stabilizer, a reinforcing material, an inorganic material additive, a pigment, a dye, and mixtures thereof in an amount of 60 parts by weight or less based on 100 parts by weight of the polycarbonate resin.

10. A molded product made using the polycarbonate resin composition according to one of claims 1 to 9.

## Patentansprüche

1. Polycarbonatharzzusammensetzung, umfassend:
(A) 70 bis 95 Gewichtsteile eines thermoplastischen Polycarbonatharzes;
(B) 5 bis 40 Gewichtsteile eines thermoplastischen nichtkristallinen Polyestercopolymers;
(C) 5 bis 50 Gewichtsteile Titandioxid;
(D) 0,1 bis 10 Gewichtsteile eines organischen Siloxanpolymers; und
(E) 0,05 bis 5 Gewichtsteile eines fluorierten Harzes auf Polyolefinbasis.

2. Polycarbonatharzzusammensetzung nach Anspruch 1, wobei es sich bei dem Polyestercopolymer (B) um ein Polyestercopolymerharz handelt, das durch teilweisen Ersatz von Alkylenglykol, das ein Polyalkylenterephthalatharz aufbaut, durch Cycloalkandialkohol erhalten wird.

3. Polycarbonatharzzusammensetzung nach Anspruch 2, wobei es sich bei dem Polyestercopolymer (B) um ein Polyestercopolymerharz handelt, das durch Ersatz von 3 bis 48 Mol-% eines Alkylenglykols, das ein Polyalkylenterephthalatharz aufbaut, durch Cycloalkandialkohol der folgenden chemischen Formel 2 erhalten wird:
[Chemische Formel 2]
**HO-(R₃)n₃-A₂-(R₄)n₄-OH**
wobei in der obigen chemischen Formel 2 A₂ für Cycloalkylen steht, R₃ und R₄ unabhängig für ein substituiertes oder unsubstituiertes Alkylen stehen und n₃ und n₄ unabhängig für ganze Zahlen im Bereich von 1 bis 4 stehen.

4. Polycarbonatharzzusammensetzung nach Anspruch 1, wobei das Titandioxid mit einem Oberflächenbehandlungsmittel aus der Gruppe bestehend aus einem anorganischen Oberflächenbehandlungsmittel und einem organischen Oberflächenbehandlungsmittel oberflächenbehandelt ist.

5. Polycarbonatharzzusammensetzung nach Anspruch 4, wobei das Titandioxid mit einem Oberflächenbehandlungsmittel aus der Gruppe bestehend aus einem anorganischen Oberflächenbehandlungsmittel aus der Gruppe bestehend aus Siliciumdioxid, Zirconiumdioxid, Natriumsilikat, Natriumaluminat, Natriumaluminiumsilikat, Glimmer und Kombinationen davon; einem organischen Oberflächenbehandlungsmittel aus der Gruppe bestehend aus Polydimethylsiloxan, Trimethylpropan (TMP), Pentaerythrit und Kombinationen davon; und Kombinationen davon in einer Menge von 0,3 Gewichtsteilen oder weniger, bezogen auf 100 Gewichtsteile des Titandioxids, oberflächenbehandelt ist.

6. Polycarbonatharzzusammensetzung nach Anspruch 1, wobei das organische Siloxanpolymer (D) durch die folgende chemische Formel 4 wiedergegeben wird: 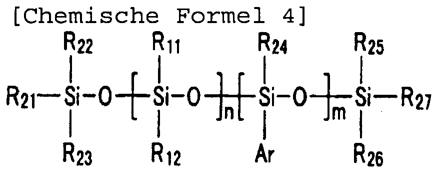 wobei in der obigen chemischen Formel 4 R₁₁ und R₁₂ unabhängig für ein Alkyl oder ein Aryl stehen, R₂₁ bis R₂₇ unabhängig aus der Gruppe bestehend aus einem Alkyl, einem Aryl, einem Hydroxy, einem Alkoxy, einem Aryloxy und einem Alkenyl ausgewählt sind, Ar für ein Aryl steht, n und m für ganze Zahlen, die eine Wiederholungseinheit wiedergeben, stehen und n+m im Bereich von 1 bis 500 liegt.

7. Polycarbonatharzzusammensetzung nach Anspruch 6, wobei das organische Siloxanpolymer aus der Gruppe bestehend aus Poly(methylphenyl)siloxan, Poly(dipehnyl)siloxan, Dimethylsiloxan-Diphenylsiloxan, einem Dimethylsiloxan-Methylphenylsiloxan-Copolymer und Kombinationen davon ausgewählt ist.

8. Polycarbonatharzzusammensetzung nach Anspruch 6, wobei das organische Siloxanpolymer eine dynamische Viskosität von 1 bis 1000 mm²/s bei 25°C aufweist.

9. Polycarbonatharzzusammensetzung nach Anspruch 1, wobei die Polycarbonatharzzusammensetzung ferner ein Additiv aus der Gruppe bestehend aus einem Ultraviolett-Stabilisator (UV-Stabilisator), einem optischen Aufheller, einem Schmiermittel, einem Trennmittel, einem Nuklearmittel, einem Antistatikum, einem Stabilisator, einem Verstärkungsmaterial, einem anorganischen Additivmaterial, einem Pigment, einem Farbstoff und Mischungen davon in einer Menge von 60 Gewichtsteilen oder weniger, bezogen auf 100 Gewichtsteile des Polycarbonatharzes, umfasst.

10. Formkörper, hergestellt unter Verwendung der Polycarbonatharzzusammensetzung nach einem der Ansprüche 1 bis 9.

## Revendications

1. Composition de résine de polycarbonate comprenant :
(A) 70 à 95 parties en poids d'une résine de polycarbonate thermoplastique ;
(B) 5 à 40 parties en poids d'un copolymère de polyester non cristallin thermoplastique ;
(C) 5 à 50 parties en poids de dioxyde de titane ;
(D) 0,1 à 10 parties en poids d'un polymère de siloxane organique ; et
(E) 0,05 à 5 parties en poids d'une résine à base de polyoléfine fluorée.

2. Composition de résine de polycarbonate selon la revendication 1, dans laquelle le copolymère de polyester (B) est une résine de copolymère de polyester qui est obtenue en substituant partiellement un alkylène glycol constituant une résine de téréphtalate de polyalkylène par du dialcool de cycloalcane.

3. Composition de résine de polycarbonate selon la revendication 2, dans laquelle le copolymère de polyester (B) est une résine de copolymère de polyester qui est obtenue en substituant 3 à 48 % en mole d'un alkylène glycol constituant une résine de téréphtalate de polyalkylène par du dialcool de cycloalcane représenté par la Formule Chimique 2 suivante :
[Formule Chimique 2]
HO-(R₃)n₃-A₂-(R₄)n₄-OH
dans laquelle, dans la Formule Chimique 2 ci-dessus, A₂ est un cycloalkylène, R₃ et R₄ sont indépendamment un alkylène substitué ou non substitué, et n₃ et n₄ sont indépendamment des entiers allant de 1 à 4.

4. Composition de résine de polycarbonate selon la revendication 1, dans laquelle le dioxyde de titane est traité en surface avec un agent de traitement de surface sélectionné à partir du groupe consistant en un agent de traitement de surface inorganique et un agent de traitement de surface organique.

5. Composition de résine de polycarbonate selon la revendication 4, dans lequel le dioxyde de titane est traité en surface avec un agent de traitement de surface sélectionné à partir du groupe consistant en un agent de traitement de surface inorganique sélectionné à partir du groupe consistant en du dioxyde de silicium, du dioxyde de zirconium, du silicate de sodium, de l'aluminate de sodium, du silicate d'aluminium sodique, du mica, et des combinaisons de ceux-ci ; un agent de traitement de surface organique sélectionné à partir du groupe consistant en du polydiméthylsiloxane, du triméthylolpropane (TMP), du pentaérythritol et des combinaisons de ceux-ci ; et des combinaisons de ceux-ci, en une quantité de 0,3 partie en poids ou moins sur base de 100 parties en poids du dioxyde de titane.

6. Composition de résine de polycarbonate selon la revendication 1, dans lequel le polymère de siloxane organique (D) est représenté par la Formule Chimique 4 suivante : 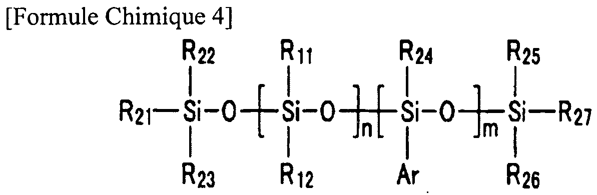 dans laquelle, dans la Formule Chimique 4 ci-dessus, R₁₁ et R₁₂ sont indépendamment un alkyle ou un aryle, R₂₁ à R₂₇ sont indépendamment sélectionnés à partir du groupe consistant en un alkyle, un aryle, un hydroxy, un alcoxy, un aryloxy et un alcényle, Ar est un aryle, n et m sont des entiers représentant une unité de répétition, et n+m va de 1 à 500.

7. Composition de résine de polycarbonate selon la revendication 6, dans laquelle le polymère de siloxane organique est sélectionné à partir du groupe consistant en du poly(méthylphényl)siloxane, du poly(diphényl)siloxane, du diméthylsiloxane-diphénylsiloxane, un copolymère de diméthylsiloxaneméthylphénylsiloxane, et des combinaisons de ceux-ci.

8. Composition de résine de polycarbonate selon la revendication 6, dans laquelle le copolymère de siloxane organique a une viscosité dynamique de 1 à 1000 mm²/s à 25 °C.

9. Composition de résine de polycarbonate selon la revendication 1, dans laquelle la composition de résine de polycarbonate comprend en outre un additif sélectionné à partir du groupe consistant en un stabilisant anti-ultraviolet (UV), un agent de blanchiment fluorescent, un lubrifiant, un agent de libération, un agent nucléaire, un agent antistatique, un stabilisant, une matière de renfort, un additif de matière inorganique, un pigment, une teinture, et des mélanges de ceux-ci en une quantité de 60 parties en poids ou moins sur base de 100 parties en poids de la résine de polycarbonate.

10. Produit moulé fabriqué en utilisant la composition de résine de polycarbonate selon l'une des revendications 1 à 9.
